# FASCICULE DE BREVET EUROPEEN

(11) **EP 3 453 103 B1**
(45) Date de publication et mention de la délivrance du brevet: **01.10.2025**
(21) Numéro de dépôt: 17725324.2
(22) Date de dépôt: 02.05.2017
(51) Int. Cl.: H02K 5/24

(54) **COMPOSANT DE RÉDUCTION DU BRUIT MONTÉ SUR LA CARCASSE D'UN MOTEUR ÉLECTRIQUE**
GERÄUSCHREDUZIERENDES BAUTEIL AUF DEM GEHÄUSE EINES ELEKTROMOTORS
NOISE-DECREASING COMPONENT MOUNTED ON THE CASING OF AN ELECTRIC MOTOR

(30) Priorité: 03.05.2016 FR 1654014
(43) Date de publication de la demande: 13.03.2019
(73) Titulaire: Foundation Brakes France SAS, 93700 Drancy (FR)
(72) Inventeur: BOURLON, Philippe, 77230 Dammartin En Goele (FR)
(74) Mandataire: LLR
(86) Numéro de dépôt international: PCT/FR2017/051046
(87) Numéro de publication internationale: WO 2017/191406

(56) Documents cités:
- DE-A1- 102005 044 665
- DE-A1- 4 306 588
- FR-A1- 2 872 196
- JP-A- 2005 124 321
- JP-A- 2005 124 321
- JP-A- 2008 006 122
- JP-A- 2008 006 122
- JP-A- S59 178 931
- JP-A- S59 178 931

## Description

L'invention se rapporte aux dispositifs de freinage de véhicule.

On connaît deux types de dispositifs de freinage pour véhicule. Dans un dispositif de freinage à disque, un disque lié à une roue du véhicule est entouré par deux plaquettes de frein. Lorsque l'utilisateur appuie sur la pédale de frein, les plaquettes se rapprochent des faces respectives du disque grâce à l'actionnement d'un piston pour y exercer une pression de façon à ralentir la rotation du disque, et donc celle de la roue. Dans un dispositif de freinage à tambour, ce sont des mâchoires situées de part et d'autre d'un axe de la roue qui s'écartent l'une de l'autre de façon à exercer des pressions sur la partie circonférentielle interne d'un tambour solidaire en rotation de la roue. Ces systèmes sont également utilisés pour les freinages manuels (« frein à main »), ou freinages de secours.

Dans tous les cas, et dans tous les dispositifs de freinage de véhicule, le freinage nécessite un actionnement. Celui-ci peut être mécanique, mais aussi électrique, ou assisté par des moyens électriques. L'invention se rapporte aux deux derniers cas, c'est-à-dire lorsque le freinage nécessite l'intervention d'un moteur électrique.

Afin de limiter les pertes magnétiques et d'augmenter l'épaisseur de la carcasse du moteur électrique du dispositif de freinage, on ajoute une tôle fendue autour de la carcasse. En effet, sans cela, les pertes magnétiques peuvent engendrer des perturbations notamment dans d'autres éléments du dispositif de freinage.

Mais, lorsque le frein est commandé, le moteur électrique du frein engendre des vibrations qui créent du bruit. Ces vibrations sont transmises à la tôle rapportée qui à son tour engendre du bruit supplémentaire. Or, le bruit peut être gênant pour le conducteur du véhicule et peut l'inquiéter au sujet de la fiabilité du freinage de son véhicule.

Les documents DE102005044665, DE4306588, FR2872196, JPS59178931, JP2005124321 et JP2008006122 divulguent des organes pour diminuer le bruit rapportés autour de moteurs électriques.

Un but de l'invention est de diminuer le bruit du dispositif de freinage électrique du véhicule.

À cet effet, on prévoit selon l'invention un organe pour moteur électrique, comprenant les caractéristiques définies dans la revendication 1.

On prévoit également selon l'invention un moteur électrique comprenant les caractéristiques définies dans la revendication 2.

Ainsi, la tôle externe n'est pas apposée contre la carcasse. L'espace situé entre la carcasse et la tôle externe permet d'amortir les vibrations du moteur, et le bruit généré est donc réduit. De plus, la tôle externe continue à remplir sa fonction de limitation des pertes magnétiques. Ainsi, l'invention permet de restreindre le champ magnétique tout en diminuant les bruits émis par le moteur.

L'organe comprend deux tôles séparées. Cet agencement « en sandwich », ou « à trois couches » permet d'absorber encore mieux les vibrations du moteur et de diminuer le bruit émis par ce dernier lorsqu'il fonctionne.

Les tôles interne et externe sont séparées par la couche de matériau, la couche de matériau étant en contact avec les tôles interne et externes.

Ainsi, l'agencement comprend trois couches : une tôle en contact avec la carcasse, une couche de matériau, et une nouvelle tôle formant la paroi externe de l'organe. Cet agencement permet d'amortir considérablement les vibrations tout en continuant à limiter les pertes magnétiques. De plus, l'épaisseur totale de l'organe peut être similaire à celle d'un organe rapporté classique sur la carcasse habituelle, qui lui ne diminue pas le bruit.

La paroi de l'organe comprend une fente allant d'une extrémité à l'autre de la paroi.

Ainsi, l'organe est ouvert, de sorte qu'il peut s'adapter à la taille de la carcasse du moteur dans une certaine mesure via un montage relativement élastique.

De préférence, la couche de matériau comprend un matériau viscoélastique.

Ainsi, les vibrations sont d'autant mieux amorties.

Avantageusement, la couche de matériau comprend un matériau élastomère.

Les élastomères sont en effet bien adaptés pour absorber les vibrations.

Alternativement, la couche de matériau comprend une matière plastique.

Dans un mode de réalisation, cette couche est chargée en particules ferromagnétiques pour conduire les champs magnétiques issus du moteur.

De préférence, la ou les tôles comprennent de l'acier magnétique. Elles peuvent également comprendre du fer doux.

On prévoit également selon l'invention un dispositif de freinage électrique de véhicule, comprenant un moteur tel qu'énoncé au-dessus.

Nous allons maintenant présenter des modes de réalisation de l'invention à l'appui des figures annexées, qui sont fournies à titre d'exemples et ne présentent aucun caractère limitatif, dans lesquelles :
- la figure 1 est une vue en perspective d'un moteur électrique selon un premier mode de réalisation de l'invention ;
- la figure 2 est une vue en perspective éclatée du moteur de la figure 1 ;
- la figure 3 est une vue en perspective éclatée d'une partie du moteur des figures précédentes ;
- la figure 4 est une vue en coupe axiale du moteur des figures précédentes ;
- la figure 5 est un schéma représentant l'invention selon le premier mode de réalisation, et
- les figures 6 à 8 sont des schémas selon des deuxième, troisième et quatrième modes de réalisation respectivement, ne représentant pas l'invention.

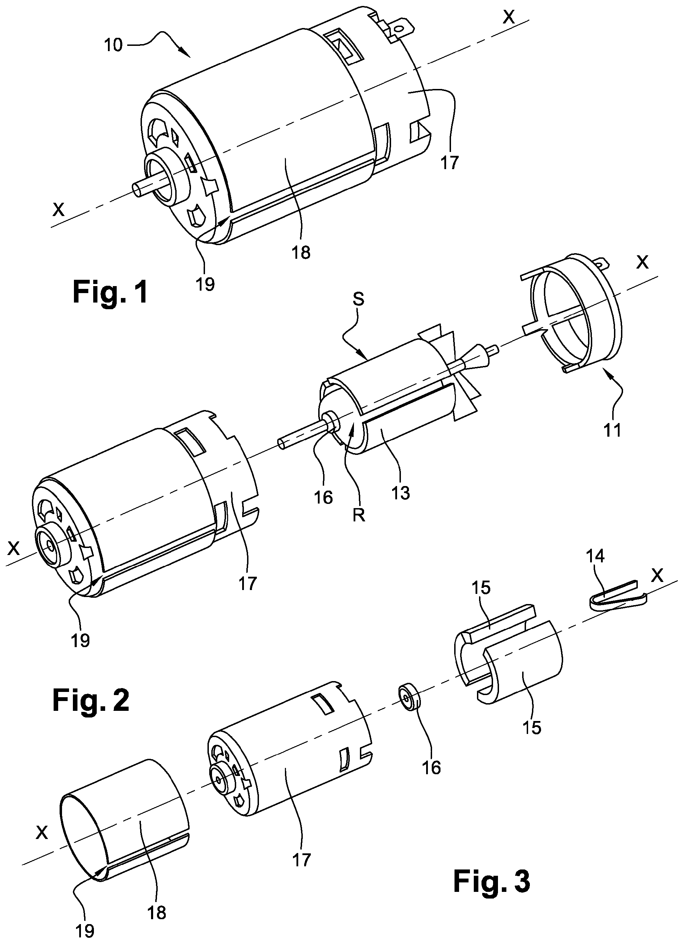

Les figures 1 à 4 illustrent un moteur électrique 10 pour un dispositif de freinage électrique de véhicule selon un premier mode de réalisation de l'invention.

Il présente une carcasse externe 17, un capot d'extrémité 11, des éléments de stator S et des éléments de rotor R.

Le stator S comprend une épingle 14 et deux aimants 15 en forme de demi-cylindres de révolution à section circulaire écartés l'un de l'autre par l'épingle 14. Le rotor R comprend un organe de rotation 13 et une bague 16. Ces éléments sont situés de façon interne aux aimants 15. Le rotor R tourne autour de l'axe de rotation X. Sur la carcasse 17 est rapporté un organe 18. C'est à cet organe 18 et à son agencement avec la carcasse 17 que nous nous intéresserons dans la suite. Tous ces éléments sont classiques et connus en eux-mêmes à l'exception de l'organe 18. Le moteur 10 forme ici un moteur à balais, collecteur, rotor bobiné et courant continu fonctionnant sous une tension de 12 V.

L'organe 18 est de forme générale cylindrique de révolution à profil circulaire dans un plan perpendiculaire à l'axe X de rotation du moteur. Sa surface externe est lisse. Il ne forme pas un cylindre complet car il présente une fente rectiligne 19 allant d'une extrémité longitudinale de l'organe à l'autre. Cette fente permet de donner une certaine latitude au rayon de l'organe 18. En effet, l'organe 18 s'étend autour de la carcasse 17 du moteur. En fonction du diamètre de cette dernière, l'organe 18 peut être ajusté, dans une certaine mesure, à la carcasse, grâce à la fente 19 dont la largeur est alors plus ou moins importante.

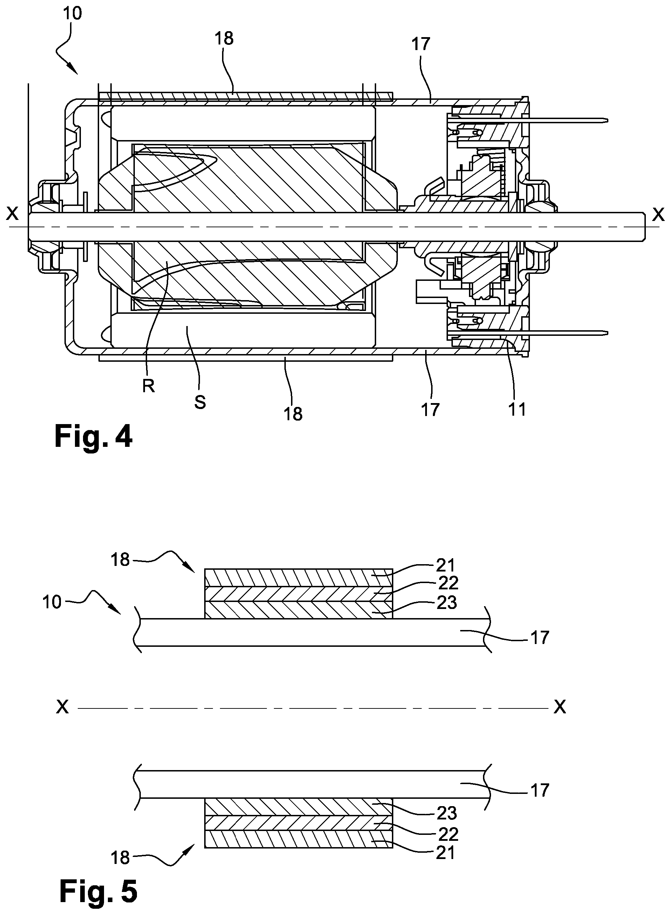

Comme on le voit à la figure 4, l'organe 18 est accolé contre la carcasse 17 du moteur 10. La figure 5 montre de façon schématique l'agencement entre l'organe 18 et la carcasse 17.

L'organe 18 comprend trois couches dans le présent mode de réalisation. Il comprend ainsi tout d'abord une couche externe 21 en acier magnétique. On peut également appeler cette couche « tôle ». Puis, une couche de matériau élastomère 22, et enfin une seconde tôle 23, c'est-à-dire une autre couche d'acier magnétique, cette fois interne. Ces trois couches sont accolées les unes aux autres et se suivent dans cet ordre en direction radiale, de sorte que les deux tôles interne 23 et externe 21 forment un sandwich autour de la couche en élastomère 22. La deuxième tôle interne est en outre en contact avec la carcasse 17, puisqu'elle est apposée dessus.

On voit donc que l'organe 18 comporte une paroi cylindrique de révolution comprenant notamment une tôle 21 située à distance de la carcasse 17.

Ainsi, lorsque le moteur tourne, les vibrations émises à l'intérieur de la carcasse 17 sont transmises par cette dernière à la tôle 23, laquelle les absorbe en partie et transmet la partie résiduelle à la couche d'élastomère 22 qui absorbe une grande partie des vibrations restantes, avant que le reste des vibrations soit transmis et absorbé en grande partie par la tôle externe 21. Ainsi, le bruit généré par le moteur et transmis par sa carcasse 17 est étouffé dans une large mesure par l'organe 18 et son agencement en trois couches. De plus, cet organe 18 permet aussi de limiter les pertes magnétiques en augmentant en quelque sorte l'épaisseur de la carcasse avec les deux couches d'acier magnétique 23 et 21. Sans cela, les pertes magnétiques pourraient perturber les autres éléments du dispositif de freinage ou d'autres éléments du véhicule. A ce sujet, grâce à la fente 19, l'élasticité de l'organe permet dans le présent mode d'assurer un contact fort entre la tôle interne 23 et la carcasse 17. Ce contact assure le guidage du champ magnétique de la carcasse 17 vers l'organe 18. Plus le contact est important entre la carcasse et l'organe, mieux le champ magnétique sera guidé et les pertes magnétiques seront d'autant plus limitées. La fente 19 permet donc d'accoler le plus possible l'organe 18 à la carcasse 17 pour limiter les pertes magnétiques.

L'organe rapporté 18 a donc une double fonction : limiter les pertes magnétiques et diminuer le bruit du moteur.

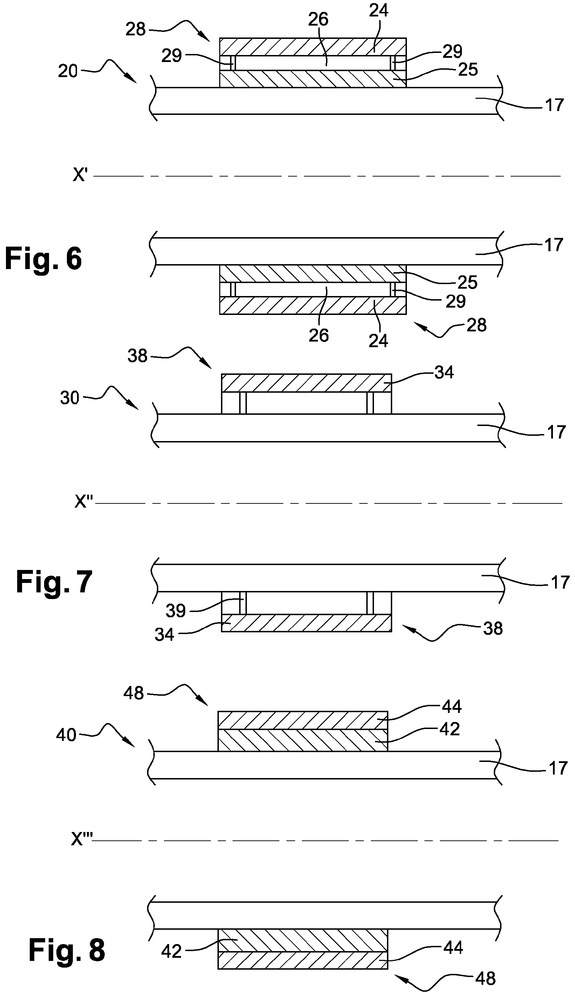

On va maintenant décrire d'autres modes de réalisation ne faisant pas partie de l'invention, illustrés schématiquement aux figures 6 à 8.

Le moteur 20 de la figure 6, qui forme un deuxième mode de réalisation, s'étend autour de son axe de rotation X' et présente un organe 28 rapporté sur la carcasse 17. Cet organe 28 comprend, comme dans le précédent mode, deux tôles 24 et 25, séparées cette fois non par une couche de matériau mais par un espace vide de pièce (et rempli d'air). C'est la différence avec le mode de réalisation précédent. Les deux tôles 24 et 25 sont similaires aux tôles 21 et 23 du mode précédent, et sont reliées entre elles par des anneaux 29 formant des entretoises. L'espace 26 permet à la tôle 25 de ne pas transmettre les vibrations du moteur 20 directement et entièrement à la tôle 24. L'organe réalise également la fonction de limitation des pertes magnétiques.

Dans le troisième mode de réalisation illustré à la figure 7, le moteur 30 s'étend autour de l'axe de rotation X" et présente un organe 38 rapporté ayant un agencement en deux couches au lieu de trois. Ainsi, la tôle 34 est située à distance de la carcasse 17, à laquelle elle est reliée via des anneaux 39 formant des entretoises et directement en regard de la carcasse cette fois. A ce sujet, les anneaux 29, du mode précédent, et 39 pourraient d'ailleurs être remplacés par tout autre moyen de liaison entre les deux faces cylindriques qu'ils lient respectivement.

Dans le quatrième mode de réalisation, l'organe 48, rapporté au moteur 40 s'étendant autour de l'axe de révolution X‴, est illustré à la figure 8 et comprend lui aussi uniquement deux couches : une tôle 44 et une couche de matériau élastomère 42 interposée suivant la direction radiale entre la tôle 44 et la carcasse et en contact avec ces deux dernières. Là encore, l'organe peut réaliser à la fois la limitation des pertes magnétiques et du bruit.

Les organes 38 et 48 à deux couches ont pour avantage d'être moins épais, et donc moins gênants pour l'environnement du moteur, que les organes 18 et 28 à trois couches. Ces derniers sont en revanche plus fiables quant à leurs performances de limitation du bruit.

Dans tous les modes de réalisation, d'autres matériaux sont utilisables à la place de l'acier magnétique, tels que du fer doux. La couche en élastomère peut également être remplacée par une couche de matière plastique, par du carton, voire par de la graisse. En effet, plusieurs types d'amortissement sont possibles pour réduire le bruit. On citera l'amortissement de Coulomb, et l'amortissement par viscosité.

Bien entendu, on pourra apporter à l'invention de nombreuses modifications sans sortir du cadre de celle-ci.

Ainsi, on peut imaginer des organes rapportés à plus de trois couches.

Par ailleurs, la fente 19 n'est pas forcément rectiligne, elle peut avoir toute autre forme. De la même manière, un organe rapporté conforme à l'invention peut présenter un profil autre que circulaire, et une surface non lisse.

Enfin, un organe rapporté conforme à l'invention peut être utilisé dans tout moteur électrique, et pas seulement pour les moteurs de dispositifs électriques de freinage.

## Revendications

1. Organe (18) pour moteur électrique (10) avec une carcasse, comprenant une paroi cylindrique de révolution présentant une fente (19) allant d'une extrémité longitudinale à l'autre de la paroi, la paroi comprenant une tôle externe (21) et une tôle interne (23) situées à distance l'une de l'autre, **caractérisé en ce que** les tôles interne (23) et externe (21) sont séparées par une couche de matériau (22) capable à absorber des vibrations, la couche de matériau étant en contact avec les tôles interne (23) et externe (21).

2. Moteur électrique (10) comprenant une carcasse cylindrique (17) et un organe (18) selon la revendication précédente, **caractérisé en ce que** l'organe est rapporté autour de la carcasse, la tôle interne (23) étant en contact avec la carcasse (17) et la tôle externe (23) étant située à distance de la carcasse (17).

3. Moteur (10) selon la revendication précédente, dans lequel la couche de matériau (22 ) comprend un matériau viscoélastique.

4. Moteur (10) selon la revendication 2, dans lequel la couche de matériau (22) comprend un matériau élastomère.

5. Moteur (10) selon la revendication 2, dans lequel la couche de matériau (22) comprend une matière plastique.

6. Moteur (10) selon l'une quelconque des revendications 2 à 5, dans lequel les tôles interne et externe (21, 23) comprennent de l'acier magnétique.

7. Dispositif de freinage électrique de véhicule, comprenant un moteur (10) selon l'une quelconque des revendications 2 à 6.

## Patentansprüche

1. Element (18) für Elektromotor (10) mit einem Gehäuse, umfassend eine kreiszylindrische Wandung, die einen Schlitz (19) aufweist, der von einem längsrichteten Ende der Wandung zu dem anderen verläuft, wobei die Wandung ein äußeres Blech (21) und ein inneres Blech (23) umfasst, die voneinander beabstandet sind, **dadurch gekennzeichnet, dass** das innere Blech (23) und das äußere Blech (21) durch eine Materialschicht (22), die imstande ist, Vibrationen zu absorbieren, getrennt sind, wobei die Materialschicht mit dem inneren Blech (23) und dem äußeren Blech (21) in Kontakt steht.

2. Elektromotor (10), umfassend ein zylindrisches Gehäuse (17) und ein Element (18) nach dem vorhergehenden Anspruch, **dadurch gekennzeichnet, dass** das Element das Gehäuse umgebend angebracht ist, wobei das innere Blech (23) in Kontakt mit dem Gehäuse (17) steht und wobei das äußere Blech (23) von dem Gehäuse (17) beabstandet ist.

3. Motor (10) nach dem vorhergehenden Anspruch, wobei die Materialschicht (22) ein viskoelastisches Material umfasst.

4. Motor (10) nach Anspruch 2, wobei die Materialschicht (22) ein Elastomermaterial umfasst.

5. Motor (10) nach Anspruch 2, wobei die Materialschicht (22) einen Kunststoff umfasst.

6. Motor (14) nach einem der Ansprüche 2 bis 5, wobei das innere Blech (23) und das äußere Blech (21) Magnetstahl umfassen.

7. Elektrische Bremsvorrichtung für Fahrzeug, umfassend einen Motor (10) nach einem der Ansprüche 2 bis 6.

## Claims

1. A component (18) for an electric motor (10) with a housing, comprising a cylindrical wall of revolution having a slot (19) extending from one longitudinal end of the wall to the other, the wall comprising an outer sheet (21) and an inner sheet (23) spaced apart from each other, **characterised in that** the inner (23) and outer (21) sheets are separated by a layer of material (22) capable of absorbing vibrations, the layer of material being in contact with the inner (23) and outer (21) sheets.

2. Electric motor (10) comprising a cylindrical casing (17) and a component (18) according to the previous claim, **characterised in that** the member is fitted around the casing, the inner sheet (23) being in contact with the casing (17) and the outer sheet (23) being spaced apart from the casing (17).

3. Motor (10) according to the previous claim, wherein the layer of material (22) comprises a viscoelastic material.

4. Motor (10) according to claim 2, wherein the layer of material (22) comprises an elastomeric material.

5. Motor (10) according to claim 2, wherein the layer of material (22) comprises a plastic material.

6. Motor (10) according to any of claims 2 to 5, wherein the inner and outer sheets (21, 23) comprise magnetic steel.

7. An electric vehicle braking device, comprising a motor (10) according to any of claims 2 to 6.
